# EUROPEAN PATENT APPLICATION

(11) **EP 2 460 676 A1**
(43) Date of publication of application: **06.06.2012**
(21) Application number: 10804286.2
(22) Date of filing: 20.07.2010
(51) Int. Cl.: B60H 1/32, F04B 49/06, F25B 49/02

(54) **REFRIGERATION CYCLE**

(30) Priority: 30.07.2009 JP 2009177992
(71) Applicant: Sanden Corporation, Isesaki-shi Gunma 372-8502 (JP)
(72) Inventor: ISHIZEKI, Tetsuya, Isesaki-shi Gunma 372-8502 (JP); INOUE, Atsuo, Isesaki-shi Gunma 372-8502 (JP); TSUBOI, Masato, Isesaki-shi Gunma 372-8502 (JP); SUZUKI, Kenichi, Isesaki-shi Gunma 372-8502 (JP)
(74) Representative: Prüfer & Partner GbR European Patent Attorneys
(86) International application number: PCT/JP2010/062188
(87) International publication number: WO 2011/013540

(57) **Abstract**

Provided is a refrigeration cycle suitable for an air conditioning system for vehicles, wherein a flow rate of refrigerant which is used to estimate a torque of a compressor can be precisely estimated by accurately detecting a difference between pressures at upstream and downstream sides of an orifice having a high correlation with the refrigerant flow rate, and ultimately, the torque of the compressor can be precisely estimated, and the estimation can be achieved while achieving space saving and cost down. Disclosed is a refrigeration cycle which has a subcool condenser integrally provided with a condensing part for refrigerant, a liquid receiver and a subcooling part, and wherein an orifice for throttling the flow of refrigerant which has passed through the condensing part of the subcool condenser is disposed, a pressure difference detection means capable of detecting a difference between pressures at upstream and downstream sides of the orifice is provided, and provided are a refrigerant flow rate estimation means for estimating a flow rate of the refrigerant with reference to the detected pressure difference and a compressor torque estimation means for estimating a torque of the compressor with reference to the estimated flow rate of the refrigerant.

## Description

### Technical Field of the Invention

The present invention relates to a refrigeration cycle, and specifically, to a refrigeration cycle which can achieve a precise estimation of a compressor torque via a precise estimation of a refrigerant flow rate easily by a compact structure and which is suitable in use for an air conditioning system for vehicles, etc.

### Background Art of the Invention

In a refrigeration cycle having a compressor, a condenser, a pressure reduction/expansion mechanism and an evaporator in this order, a technology is known wherein a subcool condenser, which is integrally provided with a condensing part for refrigerant compressed by the compressor, a liquid receiver for condensed refrigerant and a subcooling part for supercooling refrigerant sent from the liquid receiver, is used as the condenser, thereby improving the performance of the refrigeration cycle, in particular, the coefficient of performance (for example, Patent document 1).

On the other hand, in an air conditioning system for vehicles, etc., it is frequently required to estimate a torque for driving a compressor which consumes most of power in a refrigeration cycle, and if the compressor torque can be estimated accurately and at real time, it becomes possible to reflect it to a control of a vehicle engine as a drive source for the compressor (for example, engine fuel injection control), and it may contribute to save the fuel consumption of the vehicle.

For estimation of the compressor torque, a flow rate of refrigerant at that time is frequently used, and therefore, if the flow rate of refrigerant can be estimated precisely, the compressor torque can also be estimated accurately. In order to estimate the refrigerant flow rate, it is known to be effective to use a pressure difference between pressures at an upstream side and a downstream side in an appropriate zone in a refrigerant circuit (in particular, a refrigerant circuit containing a liquid phase), and in order to give a clear pressure difference within a short zone in the circuit, it is effective usually to provide an orifice.

However, only in a manner that a device for detecting the above-described pressure difference is merely incorporated in a refrigerant circuit of a refrigeration cycle, it may cause to make the refrigeration cycle large-sized from the viewpoint of disposition of equipment, and therefore, it becomes difficult to achieve space saving which is strongly required in an air conditioning system for vehicles, etc., and it becomes difficult to reduction of cost because the device for detecting a pressure difference has to be assembled separately.

### Prior art documents

### Patent documents

Patent document 1: JP-A-6-50615

### Summary of the Invention

### Problems to be solved by the Invention

Accordingly, an object of the present invention is to provide a refrigeration cycle suitable for an air conditioning system for vehicles, wherein a flow rate of refrigerant which is used to estimate a torque of a compressor can be precisely estimated by accurately detecting a difference between pressures at upstream and downstream sides of an orifice having a high correlation with the refrigerant flow rate, and ultimately, the torque of the compressor can be precisely estimated, and by performing this estimation based on the detection by a pressure difference detection means incorporated into a specified place efficiently, space saving and cost down can be achieved.

### Means for solving the Problems

To achieve the above-described object, a refrigeration cycle according to the present invention has a compressor for refrigerant, a subcool condenser which is integrally provided with a condensing part for compressed refrigerant, a liquid receiver for condensed refrigerant and a subcooling part for supercooling refrigerant sent from the liquid receiver, a pressure-reduction and expansion mechanism for reducing in pressure and expanding refrigerant sent from the subcool condenser, and an evaporator for evaporating refrigerant sent from the pressure-reduction and expansion mechanism, and is **characterized in that** an orifice for throttling a flow of refrigerant which has passed through the condensing part is disposed in the subcool condenser, a pressure difference detection means capable of detecting a pressure difference between pressures at upstream and downstream positions of the orifice in a refrigerant flow direction is provided, and provided are a refrigerant flow rate estimation means for estimating a flow rate of refrigerant with reference to a pressure difference detected by the pressure difference detection means and a compressor torque estimation means for estimating a torque of the compressor with reference to a flow rate of refrigerant estimated by the refrigerant flow rate estimation means.

Namely, in the refrigeration cycle according to the present invention, the detection of a pressure difference between pressures at upstream and downstream positions of an orifice in a refrigerant flow direction, which becomes a basis of a precise estimation of the flow rate of refrigerant, ultimately, a basis of a precise estimation of the compressor torque, is carried out by disposing the orifice within the subcool condenser, more concretely, by disposing the orifice for throttling the flow of the refrigerant which has passed through the subcooling part thereof within the subcool condenser. Since the orifice is disposed in a specified region in the subcool condenser, it is not necessary to incorporate the orifice itself into a refrigerant circuit as a separate device, and it can be treated as a device preassembled in the subcool condenser and the subcool condenser incorporated with the orifice can be treated as a single device. Namely, by a single device which is the subcool condenser incorporated with the orifice, in addition to the essential functions of condensing and supercooling of the subcool condenser, an object up to the detection of the pressure difference can be achieved. As a result, the refrigeration cycle assembling the orifice for the detection of the pressure difference can be realized while achieving space saving and cost down.

Further, since the orifice is disposed relatively to the refrigerant which has passed through the condensing part in the subcool condenser, the pressure difference between pressures at the upstream and downstream sides of the orifice is detected in a region where the refrigerant is in a stable condition of mainly liquid phase, a precise detection of the pressure difference can be carried out efficiently. The precise detection of the pressure difference enables a precise estimation of the refrigerant flow rate, and ultimately, enables a precise estimation of the compressor torque.

In the refrigeration cycle according to the present invention, the above-described orifice may be provided between the condensing part and the liquid receiver in the subcool condenser, and may be provided between the liquid receiver and the subcooling part in the subcool condenser. At any position of these, a precise detection of the pressure difference in a stable refrigerant region of mainly liquid phase is possible.

The detection of a pressure at an upstream position of the orifice in the refrigerant flow direction may be carried out at an immediate upstream side of the orifice. Although the detection of a pressure at a downstream position of the orifice in the refrigerant flow direction may be carried out at an immediate downstream position of the orifice, in consideration of the disposition and the easiness of assembly of the pressure sensing part, it is preferably carried out at an exit of the subcooling part. Because a relatively stable refrigerant flow can be expected in the subcooling part, a factor of fluctuation due to passing of refrigerant through the subcooling part is very small.

In the refrigeration cycle according to the present invention, the above-described pressure difference detection means can be formed as means for detecting the pressure difference by calculating a difference between pressures detected by a first pressure sensor for detecting a pressure at an upstream position of the orifice in the refrigerant flow direction and a second pressure sensor different from the first pressure sensor for detecting a pressure at a downstream position of the orifice in the refrigerant flow direction. Namely, the first pressure sensor and the second pressure sensor can detect pressures independently from each other, and a desired pressure difference can be calculated and detected by determining a difference between both detected amounts.

Therefore, the above-described refrigerant flow rate estimation means can also estimate a flow rate of refrigerant with reference to the pressure difference detected by the pressure difference detection means and with reference to an amount detected by the first pressure sensor and/or the second pressure sensor. In this structure, it becomes possible to estimate the refrigerant flow rate at a condition adding an absolute value of pressure at the detection position and the state of refrigerant accompanying with the absolute value to the pressure difference, and therefore, it becomes possible to estimate the refrigerant flow rate more precisely.

Further, the above-described compressor torque estimation means can estimate a torque of the compressor with reference to a flow rate of refrigerant estimated by the refrigerant flow rate estimation means, a physical amount having a correlation with a suction pressure of the compressor, a physical amount having a correlation with a rotational speed of the compressor, and an amount detected by the first pressure sensor.

Except the above-described structure providing the first pressure sensor and the second pressure sensor independent from each other, a structure may also be employed wherein the above-described pressure difference detection means is formed as means for detecting the pressure difference by a pressure difference sensor which directly detects a pressure difference between pressures at upstream and downstream positions of the orifice in the refrigerant flow direction. In this case, although absolute values of pressures at upstream and downstream positions of the orifice cannot be determined, because a pressure difference necessary for the estimation of refrigerant flow rate can be detected directly, a quicker estimation of refrigerant flow rate becomes possible.

Such a refrigeration cycle according to the present invention is suitable, in particular, for use in an air conditioning system for vehicles which strongly requires space saving and cost down.

### Effect according to the Invention

In the refrigeration cycle according to the present invention, since an orifice is disposed in a specified region in the subcool condenser and a pressure difference between pressures at upstream and downstream positions of the orifice can be precisely detected, based on this detection, a refrigerant flow rate having a high correlation with the pressure difference, and ultimately, a compressor torque, can be estimated accurately. Then, because the orifice is incorporated into the subcool condenser and the subcool condenser incorporated with the orifice can be treated as a single device, while achieving a desired detection of pressure difference, space saving and cost down can be achieved as the whole of the refrigeration cycle, and an optimum structure can be realized for an air conditioning system for vehicles, etc.

### Brief explanation of the drawings

[Fig. 1] Fig. 1 is a schematic diagram of a refrigeration cycle according to an embodiment of the present invention.
[Fig. 2] Fig. 2 depicts diagrams in characteristics showing examples of P-h diagrams of the refrigeration cycle depicted in Fig. 1.

### Embodiments for carrying out the Invention

Hereinafter, desirable embodiments of the present invention will be explained referring to figures.

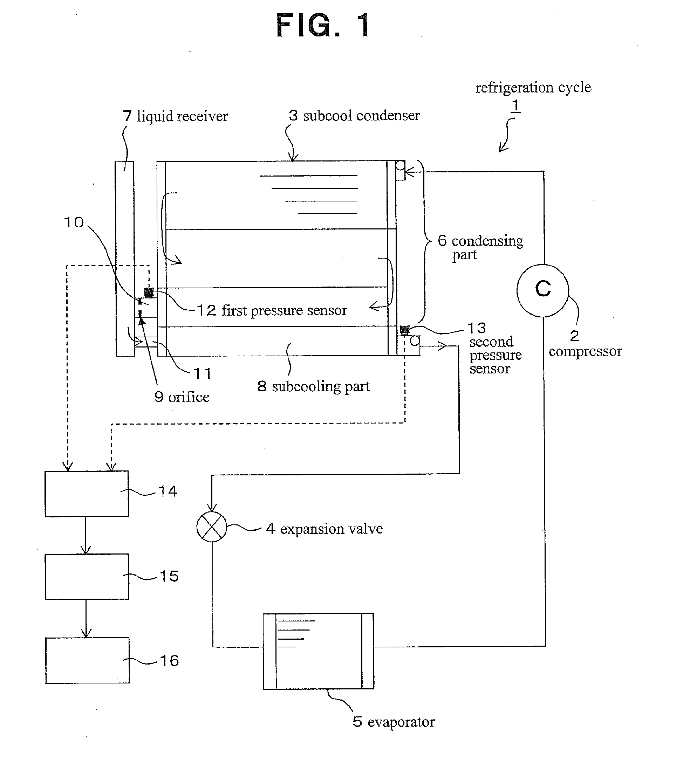

Fig. 1 shows a schematic structure of a refrigeration cycle according to an embodiment of the present invention. In the figure, symbol 1 indicates the whole of a refrigeration cycle, and refrigeration cycle 1 has a compressor 2 for compressing refrigerant, a subcool condenser 3 for condensing the compressed refrigerant and carrying out up to supercooling the refrigerant, an expansion valve 4 as a pressure reduction-expansion mechanism for pressure reducing and expanding the refrigerant sent from the subcool condenser 3, and an evaporator 5 for evaporating the refrigerant sent from the expansion valve 4. Subcool condenser 3 is structured as a device integrally provided with a condensing part 6 for refrigerant, a liquid receiver 7 for the refrigerant condensed at the condensing part 6, and a subcooling part 8 for supercooling the refrigerant sent from the liquid receiver 7. In condensing part 6 and subcooling part 8, a plurality of heat exchange tubes are disposed in parallel. As shown by arrows in the figure, the refrigerant from compressor 2 is sent to condensing part 6, after being turned twice and passing through three passes, it is sent to liquid receiver 7, and after it is sent from liquid receiver 7 to subcooling part 8, it is sent from the exit of subcooling part 8 to expansion valve 4.

In this subcool condenser 3, an orifice 9 for throttling the flow of the refrigerant which has passed through condensing part 6 is disposed, and in this embodiment, orifice 9 is provided in a communication path 10 between condensing part 6 and liquid receiver 7. Where, this orifice 9 may be provided in a communication path 11 between liquid receiver 7 and subcooling part 8 as aforementioned.

In subcool condenser 3, provided is a pressure difference detection means capable of detecting a pressure difference between pressures at upstream and downstream positions of orifice 9 in the refrigerant flow direction. In this embodiment, a first pressure sensor 12 is provided at a downstream side of condensing part 6 and at an upstream side of orifice 9, a second pressure sensor 13 is provided at an exit of subcooling part 8, and a difference between the amounts detected by both sensors 12, 13 is calculated by a pressure difference calculation means 14 as a pressure difference to be detected in the present invention. In case where orifice 9 is provided in communication path 11 between liquid receiver 7 and subcooling part 8, the first pressure sensor 12 may be provided at an upstream position of the orifice 9. Further, although second pressure sensor 13 at the downstream position of orifice 9 may be disposed at an immediate downstream position of orifice 9, in consideration of easiness of assembly and a condition where the refrigerant state in subcooling part 8 is relatively stable, it is preferred to dispose it at the exit of subcooling part 8 as described above. Where, as aforementioned, the detection of the pressure difference can be carried out by a pressure difference sensor (not depicted) which directly detects a pressure difference between pressures at upstream and downstream positions of orifice 9 in the refrigerant flow direction, except the above-described structure providing first pressure sensor 12 and second pressure sensor 13 independent from each other.

A refrigerant flow rate estimation means indicated by symbol 15 estimates a flow rate of refrigerant with reference to the pressure difference calculated (detected) by pressure difference calculation means 14 (pressure difference detection means). In this case, if the amount detected by first pressure sensor 12 and/or second pressure sensor 13 (namely, a physical amount having a correlation with an absolute value of a detected pressure) is referred together, a more accurate estimation of refrigerant flow rate becomes possible.

The torque of compressor 2 is estimated by a compressor torque estimation means 16 with reference to the refrigerant flow rate estimated by the above-described refrigerant flow rate estimation means 15. With respect to this estimation of the torque of compressor 2, for example, it is possible to estimate the compressor torque with reference to the refrigerant flow rate estimated by refrigerant flow rate estimation means 15, a physical amount having a correlation with the suction pressure of compressor 2 (for example, a physical amount detected by a suction pressure sensor), a physical amount having a correlation with the rotational speed of compressor 2, and an amount detected by the above-described first pressure sensor 12.

Thus, by disposing orifice 9 for throttling the flow of the refrigerant having passed through condensing part 6 in a specified region in subcool condenser 3 and detecting a pressure difference between pressures at upstream and downstream positions of orifice 9 precisely, the refrigerant flow rate having a high correlation with the pressure difference, and ultimately, the compressor torque, can be estimated accurately. Further, because subcool condenser 3 incorporated with orifice 9 can be treated as a single device including the orifice 9, while achieving a desired detection of pressure difference, space saving and cost down can be achieved as the whole of the refrigeration cycle.

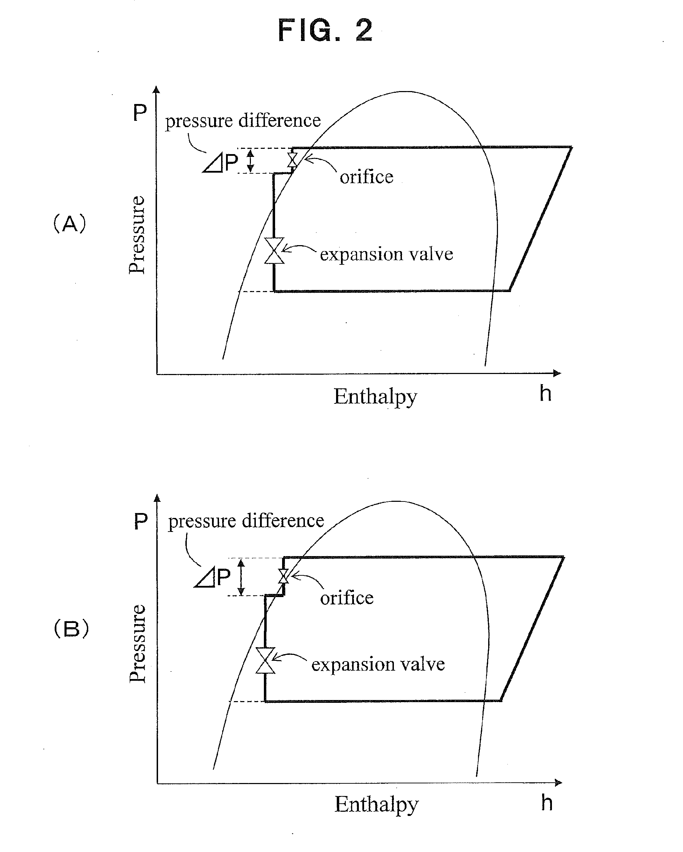

The operation of the refrigeration cycle according to the present invention can be represented by a P-h diagram, for example, as shown in Figs. 2 (A) and (B). Namely, by orifice 9 provided in subcool condenser 3, a pressure difference between the upstream and downstream positions of the orifice is forcibly given, and the flow rate of refrigerant having a high correlation with the pressure difference, and ultimately, the compressor torque, are estimated. At that time, the stable and accurate detection of the pressure difference between the upstream and downstream positions of the orifice may contribute to an accurate estimation of refrigerant flow rate and an accurate estimation of compressor torque. In order to detect the pressure difference between the upstream and downstream positions of the orifice accurately at a stable condition, it is preferred to detect it at a condition where there is no phase change of refrigerant or an extremely small phase change. For example, as shown in Fig. 2(A), it is preferred to be set so that a pressure difference ΔP due to the orifice occurs in the same liquid phase. However, for example, as shown in Fig. 2(B), even if a pressure difference ΔP occurs over the phase changing region, although the accuracy may be reduced slightly, it is possible to estimate the refrigerant flow rate and the compressor torque at a sufficiently high accuracy.

### Industrial Applications of the Invention

The refrigeration cycle according to the present invention can be applied to any refrigeration cycle requiring to estimate a compressor torque accurately, and in particular, it is suitable for use in an air conditioning system for vehicles which requires space saving and cost down.

### Explanation of symbols

- 1:: refrigeration cycle
- 2:: compressor
- 3:: subcool condenser
- 4:: expansion vale as pressure reduction-expansion mechanism
- 5:: evaporator
- 6:: condensing part
- 7:: liquid receiver
- 8:: subcooling part
- 9:: orifice
- 10, 11:: communication path
- 12:: first pressure sensor
- 13:: second pressure sensor
- 14:: pressure difference calculation means
- 15:: refrigerant flow rate estimation means
- 16:: compressor torque estimation means

## Claims

1. A refrigeration cycle having a compressor for refrigerant, a subcool condenser which is integrally provided with a condensing part for compressed refrigerant, a liquid receiver for condensed refrigerant and a subcooling part for supercooling refrigerant sent from said liquid receiver, a pressure-reduction and expansion mechanism for reducing in pressure and expanding refrigerant sent from said subcool condenser, and an evaporator for evaporating refrigerant sent from said pressure-reduction and expansion mechanism, **characterized in that** an orifice for throttling a flow of refrigerant which has passed through said condensing part is disposed in said subcool condenser, a pressure difference detection means capable of detecting a pressure difference between pressures at upstream and downstream positions of said orifice in a refrigerant flow direction is provided, and provided are a refrigerant flow rate estimation means for estimating a flow rate of refrigerant with reference to a pressure difference detected by said pressure difference detection means and a compressor torque estimation means for estimating a torque of said compressor with reference to a flow rate of refrigerant estimated by said refrigerant flow rate estimation means.

2. The refrigeration cycle according to claim 1, wherein said orifice is provided between said condensing part and said liquid receiver in said subcool condenser.

3. The refrigeration cycle according to claim 1, wherein said orifice is provided between said liquid receiver and said subcooling part in said subcool condenser.

4. The refrigeration cycle according to any of claims 1 to 3, wherein detection of a pressure at a downstream position of said orifice in said refrigerant flow direction is carried out at an exit of said subcooling part.

5. The refrigeration cycle according to any of claims 1 to 4, wherein said pressure difference detection means detects said pressure difference by calculating a difference between pressures detected by a first pressure sensor for detecting a pressure at an upstream position of said orifice in said refrigerant flow direction and a second pressure sensor different from said first pressure sensor for detecting a pressure at a downstream position of said orifice in said refrigerant flow direction.

6. The refrigeration cycle according to claim 5, wherein said refrigerant flow rate estimation means estimates a flow rate of refrigerant with reference to a pressure difference detected by said pressure difference detection means and with reference to an amount detected by said first pressure sensor and/or said second pressure sensor.

7. The refrigeration cycle according to claim 5 or 6, wherein said compressor torque estimation means estimates a torque of said compressor with reference to a flow rate of refrigerant estimated by said refrigerant flow rate estimation means, a physical amount having a correlation with a suction pressure of said compressor, a physical amount having a correlation with a rotational speed of said compressor, and an amount detected by said first pressure sensor.

8. The refrigeration cycle according to any of claims 1 to 4, wherein said pressure difference detection means detects said pressure difference by a pressure difference sensor which directly detects a pressure difference between pressures at upstream and downstream positions of said orifice in a refrigerant flow direction.

9. The refrigeration cycle according to any of claims 1 to 8, wherein said refrigeration cycle is used for an air conditioning system for vehicles.
